# EUROPEAN PATENT APPLICATION

(11) **EP 2 712 141 A1**
(43) Date of publication of application: **26.03.2014**
(21) Application number: 12826777.0
(22) Date of filing: 24.04.2012
(51) Int. Cl.: H04L 29/06, H04L 12/70, H04L 12/46

(54) **METHOD, SYSTEM AND DEVICE FOR AUTHENTICATING IP PHONE AND NEGOTIATING VOICE FIELD**

(30) Priority: 26.08.2011 CN 201110249761
(71) Applicant: Huawei Technologies Co., Ltd, Shenzhen, Guangdong 518129 (CN)
(72) Inventor: YIN, Yulou, Shenzhen Guangdong 518129 (CN); YU, Bin, Shenzhen Guangdong 518129 (CN)
(74) Representative: Pfenning, Meinig & Partner GbR
(86) International application number: PCT/CN2012/074570
(87) International publication number: WO 2013/029381

(57) **Abstract**

Embodiments of the present invention provide a method, system and device for authenticating an IP phone and negotiating a voice domain, so as to implement a dynamic security authentication and negotiation. The method includes: receiving an authentication request packet sent by an internet-based phone IP Phone; encapsulating an user name and password of the IP Phone in a remote authentication dial in user service RADIUS request packet, and sending the RADIUS packet encapsulating the user name and password of the IP Phone to a RADIUS server; and if a result of the authentication performed by the RADIUS server on the IP Phone is that the authentication succeeds, sending a voice domain virtual local area network Voice VLAN value to the IP Phone through an extensible authentication protocol EAP extension packet. In the present invention, dynamic security authentication and negotiation functions between a client and a server, and rapid deployment of an internal network of an enterprise may be implemented.

## Description

This application claims priority to Chinese Patent Application No. CN201110249761.7, filed with the Chinese Patent Office on August 26, 2011, and entitled "METHOD, SYSTEM AND DEVICE FOR AUTHENTICATING IP PHONE AND NEGOTIATING VOICE DOMAIN", which is incorporated herein by reference in its entirety.

### TECHNICAL FIELD

The present invention relates to the field of communications, and in particular, to a method, system and device for authenticating an IP (Internet Protocol, internet protocol) phone and negotiating a voice domain.

### BACKGROUND

An 802.1x protocol is a standard put forward by the Institute of Electrical and Electronics Engineers (Institute of Electrical and Electronics Engineers, IEEE) and applied to layer 2 port flow control, which implements connection and disconnection of network connectivity according to whether a check of the validity on a terminal user is passed, and thereby controls the security of a whole access network at a port level. Currently, terminals supporting the 802.1x protocol include a personal computer (Personal Computer, PC), a printer, a personal digital assistant (Personal Digital Assistant, PDA), and an internet-based phone (IP Phone); however, the IEEE standard does not have description about a standard of an 802.1x authentication on voice devices such as the IP Phone, and in an actual application, there is a conflict and inconsistency between the IP Phone supporting the 802.1x authentication and a scenario of the 802.1x authentication.

To be compatible with a port where an IP Phone in a voice (Voice) domain and a PC in a data (Data) domain exist at the same time, a port mode generally needs to be defined. In this port mode, a switch virtualizes the port as a data domain and a voice domain, devices (namely, the PC and the IP Phone) under the two domains require independent authentication. After the IP Phone is authenticated successfully, the IP Phone is granted an access permission to the voice domain; and after the PC connected behind the IP Phone passes the authentication, the PC is granted a permission to the data domain. However, there is no specific method for identifying the PC in the data domain and the IP Phone in the voice domain in a standard of the extensible authentication protocol (Extensible Authentication Protocol, EAP), that is to say, the authenticated devices (the PC and the IP Phone) must assume this part of responsibility.

A method for authenticating an IP phone (IP Phone) and negotiating a voice domain provided in the prior art includes the following: before authentication, an initialized state of the IP Phone carries a default virtual local area network (Virtual Local Area Network, VLAN) value (for example, vlan = 1); the IP Phone supporting an 802.1x protocol starts the authentication and the authentication succeeds through a remote authentication dial in user service (Remote Authentication Dial In User Service, RADIUS); after the authentication succeeds, a RADIUS server encapsulates a dynamically configured VLAN value and a private attribute "cisco-av-pari = voice" of a vendor such as CISCO (CISCO) in a RADIUS_ACCEPT packet and delivers the RADIUS_ACCEPT packet to a CISCO switch; the CISCO switch determines that the attribute is delivered to an ordinary PC or an IP Phone by identifying the private attribute "cisco-av-pari = voice" in the RADIUS-ACCEPT packet and the VLAN value; since the "cisco-av-pair" identifies that a client is the IP Phone (which may be known from "cisco-av-pari = voice"), the CISCO switch provides, through negotiation, the dynamic VLAN value delivered by the RADIUS server to the IP Phone as a voice domain virtual local area network (Voice-VLAN) value through a link layer discovery protocol (Link Layer Discovery Protocol, LLDP), that is, a virtual local area network is formed according to voice; and after the IP Phone obtains the Voice-VLAN value through negotiation, subsequent voice data carries the Voice-VLAN value, and priority are scheduled.

It is known from the foregoing method for authenticating an IP phone (IP Phone) and negotiating a voice domain that the method provided in the prior art needs to use a private attribute of the vendor CISCO to identify that a corresponding user is an IP Phone or a PC, and delivers the voice-vlan value to the IP Phone by using the method of private attribute, where the IP Phone supporting the LLDP is further required. In other words, the method for authenticating an IP phone (IP Phone) and negotiating a voice domain provided in the prior art is bound to a specific switch vendor, which definitely brings many limitations.

### SUMMARY

Embodiments of the present invention provide a method, system and device for authenticating an IP phone and negotiating a voice domain, so as to eliminate dependence on a switch of a specific vendor during authentication and implement a dynamic security authentication and negotiation.

In one aspect according to an embodiment of the present invention, a method for authenticating an IP phone and negotiating a voice domain includes:
receiving an authentication request packet sent by an internet-based phone IP Phone, where the authentication request packet carries a user name of the IP Phone and a password of the IP Phone;
encapsulating the user name of the IP Phone and the password of the IP Phone in a remote authentication dial in user service RADIUS request packet, and sending the RADIUS packet encapsulating the user name of the IP Phone and the password of the IP Phone to a RADIUS server, so that the RADIUS server authenticates the IP Phone;
if a result of the authentication performed by the RADIUS server on the IP Phone is that the authentication succeeds, sending a voice domain virtual local area network Voice VLAN value to the IP Phone through an extensible authentication protocol EAP extension packet, so that the IP Phone sets the voice domain virtual local area network according to the Voice VLAN value.

In another aspect according to an embodiment of the present invention, a method for authenticating an IP phone and negotiating a voice domain includes:
receiving, by a remote authentication dial in user service RADIUS server, a RADIUS request packet, where the RADIUS request packet encapsulates a user name of an internet-based phone IP Phone and a password of the IP Phone;
authenticating, by the RADIUS server, the IP Phone according to the user name of the IP Phone and the password of the IP Phone;
if the authentication succeeds, sending, by the RADIUS server, a voice domain virtual local area network Voice VLAN value to a sender of the RADIUS request packet, so that the sender of the RADIUS request packet sends the Voice VLAN value to the IP Phone through an extensible authentication protocol EAP extension packet.

In still another aspect according to an embodiment of the present invention, an apparatus for authenticating an IP phone and negotiating a voice domain includes:
a receiving module, configured to receive an authentication request packet sent by an internet-based phone IP Phone, where the authentication request packet carries a user name of the IP Phone and a password of the IP Phone;
an encapsulating module, configured to encapsulate the user name of the IP Phone and the password of the IP Phone in a remote authentication dial in user service RADIUS request packet, and send the RADIUS request packet encapsulating the user name of the IP Phone and the password of the IP Phone to a RADIUS server, so that the RADIUS server authenticates the IP Phone; and
a sending module, configured to: if a result of the authentication performed by the RADIUS server on the IP Phone is that the authentication succeeds, send a voice domain virtual local area network Voice VLAN value to the IP Phone through an extensible authentication protocol EAP extension packet, so that the IP Phone sets a voice domain virtual local area network according to the Voice VLAN value.

In one aspect according to an embodiment of the present invention, an authentication server includes:
a receiving module, configured to receive a RADIUS request packet, where the RADIUS request packet encapsulates a user name of an internet-based phone IP Phone and a password of the IP Phone;
an authenticating module, configured to authenticate the IP Phone according to the user name of the IP Phone and the password of the IP Phone; and
a sending module, configured to: if the authentication succeeds, send a voice domain virtual local area network Voice VLAN value to a sender of the RADIUS request packet, so that the sender of the RADIUS request packet sends the Voice VLAN value to the IP Phone through an extensible authentication protocol EAP extension packet.

In still another aspect according to an embodiment of the present invention, a system for authenticating an IP phone and negotiating a voice domain includes an apparatus for authenticating an IP phone and negotiating a voice domain and an authentication server, where the authentication server is a server used for a remote authentication dial in user service RADIUS;
the apparatus for authenticating the IP phone and negotiating the voice domain is configured to: receive an authentication request packet sent by an internet-based phone IP Phone; encapsulate the user name of the IP Phone and the password of the IP Phone carried in the authentication request packet in a RADIUS request packet, and send the RADIUS packet encapsulating the user name of the IP Phone and the password of the IP Phone to the authentication server; when a result of the authentication performed by the authentication server on the IP Phone is that the authentication succeeds, send a voice domain virtual local area network Voice VLAN value to the IP Phone through an extensible authentication protocol EAP extension packet, so that the IP Phone sets a voice domain virtual local area network according to the Voice VLAN value; and
the authentication server is configured to receive the RADIUS request packet encapsulating the user name of the internet-based IP Phone and the password of the IP Phone sent by the apparatus for authenticating the IP phone and negotiating the voice domain, authenticate the IP Phone according to the user name of the IP Phone and the password of the IP Phone, and after the authentication succeeds, send the voice domain virtual local area network Voice VLAN value to the apparatus for authenticating the IP phone and negotiating the voice domain, so that the apparatus for authenticating the IP phone and negotiating the voice domain sends the Voice VLAN value to the IP Phone through the extensible authentication protocol EAP extension packet.

It may be known from the foregoing embodiments of the present invention that the voice domain virtual local area network Voice VLAN value is sent to the IP Phone through the EAP extension packet; since the EAP extension packet is an extension of a standard EAP packet, compared with the prior art in which the authentication of the IP phone (IP Phone) and negotiation of the voice domain needs to be bound to a specific switch vendor and a private attribute of the vendor, the method for authenticating the IP phone and negotiating the voice domain provided in the embodiments of the present invention has better adaptability, the authentication process does not depend on the specific switch vendor and the private attribute of the vendor, and dynamic security authentication and negotiation functions between a client and a server and rapid deployment of an internal network of an enterprise may be implemented.

### BRIEF DESCRIPTION OF DRAWINGS

To describe the technical solutions in the embodiments of the present invention more clearly, the following briefly introduces accompanying drawings required for describing the prior art or the embodiments. Apparently, the accompanying drawings in the following description show merely some embodiments of the present invention, and a person of ordinary skill in the art may still derive other drawings from these accompanying drawings.
FIG. 1 is a schematic flowchart of a method for authenticating an IP phone and negotiating a voice domain according to an embodiment of the present invention;
FIG. 2 is a schematic diagram of a format of a standard extensible authentication protocol packet;
FIG. 3 is a schematic diagram of a format of an EAP extension packet according to an embodiment of the present invention;
FIG. 4-1 is a schematic diagram of a format of an EAP extension packet according to another embodiment of the present invention;
FIG. 4-2 is a schematic diagram of a format of an EAP extension packet according to another embodiment of the present invention;
FIG. 5 is a schematic flowchart of a method for authenticating an IP phone and negotiating a voice domain according to another embodiment of the present invention;
FIG. 6 is a schematic structural diagram of an apparatus for authenticating an IP phone and negotiating a voice domain according to an embodiment of the present invention;
FIG. 7 is a schematic structural diagram of an apparatus for authenticating an IP phone and negotiating a voice domain according to another embodiment of the present invention;
FIG. 8 is a schematic structural diagram of an authentication server according to an embodiment of the present invention; and
FIG. 9 is a schematic structural diagram of a system for authenticating an IP phone and negotiating a voice domain according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

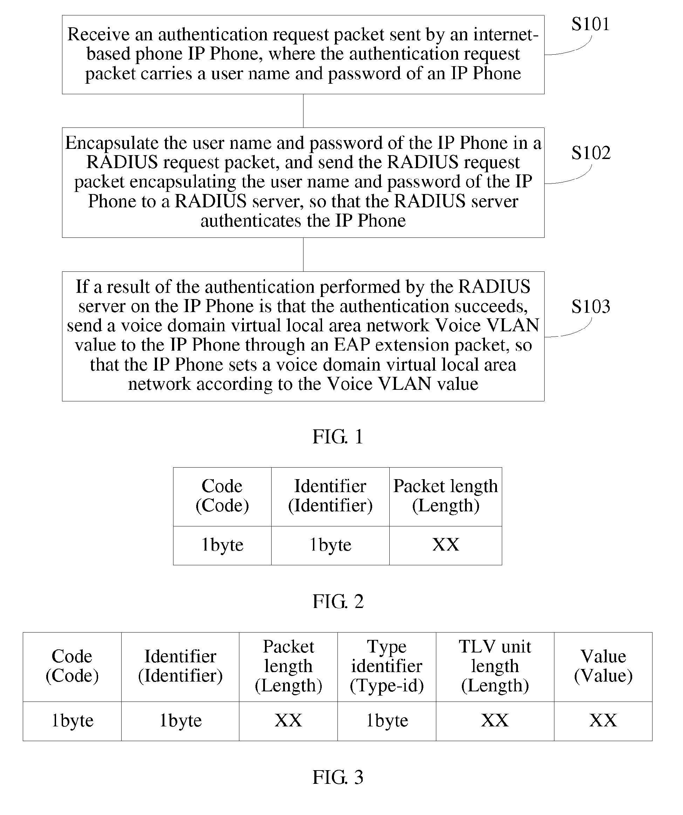

Referring to FIG. 1, FIG. 1 is a schematic flow chart of a method for authenticating an IP phone and negotiating a voice domain according to an embodiment of the present invention. In the embodiment shown in FIG. 1, an execution body of the method may be a switch or a broadband remote access server (Broadband Remote Access Server, BRAS). The description is made through an example in which the execution body is a switch, but a person skilled in the art may understand that this should not be considered as a limitation to the present invention. The method for authenticating the IP phone and negotiating the voice domain according to an embodiment shown in FIG. 1 mainly includes:
S101: Receive an authentication request packet sent by an internet-based phone IP Phone, where the authentication request packet carries a user name of the IP Phone and a password of the IP Phone.

In the embodiment of the present invention, each new IP Phone uses a MAC (Media Access Control, media access control) address of the new IP Phone as a user name to configure an account on a RADIUS server for authentication, initially plans a corresponding Voice-VLAN, and establishes a database; the following table 1 is a schematic table in which the IP Phone configures an account on the RADIUS server. Further, for each IP Phone account, an IP address, a welcome message (displayed to a user when the authentication succeeds) and an authentication failure message (displayed to the user when the authentication fails), and the like may further be allocated.

**Table 1**

| **User** | **Status** | **Group** | **Network Access Profile** |
|---|---|---|---|
| 000f3d832437 | Enabled | Default Group (21 users) | (Default) |
| 001882112233 | Enabled | Default Group (21 users) | (Default) |
| 001c23229ff3 | Enabled | Default Group (21 users) | (Default) |
| 081ff362a64-1 | Enabled | Default Group (21 users) | (Default) |
| 123 | Enabled | Default Group (21 users) | (Default) |
| 123456 | Enabled | Default Group (21 users) | (Default) |
| admin | Enabled | Default Group (21 users) | (Default) |
| CP-7962g-sep081ff362a64-1 | Enabled | Default Group (21 users) | (Default) |
| **CP-7975G-SEP0021A084D8B0** | Enabled | Default Group (21 users) | (Default) |

When it is required to authenticate an IP Phone, the IP Phone is inserted into a port of a switch supporting power over Ethernet (Power Over Ethernet, POE), and the switch powers on the IP Phone. After the IP Phone is started, the IP Phone sends an authentication request packet to the switch, for example, an "EAPOL_START" packet. The switch receives the authentication request packet sent by the IP Phone. The authentication request packet carries a user name (that is, a MAC address of the IP Phone) of the IP Phone and a password of the IP Phone preconfigured on a RADIUS server.
S102: Encapsulate the user name of the IP Phone and the password of the IP Phone in the RADIUS request packet, and send the RADIUS request packet encapsulating the user name of the IP Phone and the password of the IP Phone to the RADIUS server, so that the RADIUS server authenticates the IP Phone.

The RADIUS server authenticates the IP Phone according to the user name and password of the IP Phone carried in the RADIUS request packet.
S103: If a result of the authentication performed by the RADIUS server on the IP Phone is that the authentication succeeds, send a voice domain virtual local area network Voice VLAN value to the IP Phone through an EAP extension packet, so that the IP Phone sets a voice domain virtual local area network according to the Voice VLAN value.

In the embodiment of the present invention, if the result of the authentication performed by the RADIUS server on the IP Phone is that the authentication succeeds, that is, if the user name and password of the IP Phone carried in the RADIUS request packet sent by the switch correctly match the user name of the IP Phone and the password of the IP Phone preconfigured on the RADIUS server, the RADIUS server sends voice domain virtual local area network Voice VLAN value information preconfigured for the IP Phone to the switch through a RADIUS response packet.

The switch directly removes an EAPOL attribute in the RADIUS response packet sent by the RADIUS server, adds a packet header (mainly including a source MAC address and a destination MAC address) of a data link layer, and forms and sends an EAPOL_SUCCESS packet to the IP Phone, where the EAPOL_SUCCESS packet is an extension of an EAP packet. After the IP Phone receives the EAP extension packet, the IP Phone extracts a Voice VLAN value from the EAP extension packet, and sets the voice domain virtual local area network according to the Voice VLAN value.

It may be known from the foregoing method for authenticating the IP phone and negotiating the voice domain according to the embodiment of the present invention that, the switch sends the voice domain virtual local area network Voice VLAN value to the IP Phone through the EAP extension packet; since the EAP extension packet is an extension of a standard EAP packet, compared with the prior art in which the authentication of the IP phone (IP Phone) and negotiating the voice domain needs to be bound to a specific switch vendor and a private attribute of the vendor, the method for authenticating the IP phone and negotiating the voice domain according to the embodiment of the present invention has better adaptability, the authentication process does not depend on the specific switch vendor and the private attribute of the vendor, and dynamic security authentication and negotiation functions between a client and a server and rapid deployment of an internal network of an enterprise may be implemented.

In the embodiment of the present invention, the sending, by the switch, the voice domain virtual local area network Voice VLAN value to the IP Phone through the EAP extension packet specifically includes: extending, by the switch, the EAP packet, filling in the EAP extension packet and an extension field of the EAP extension packet with an authentication success identifier and the Voice VLAN value, respectively, and sending the EAP extension packet filled with the authentication success identifier and the Voice VLAN value to the IP Phone.

FIG. 2 shows a standard EAP packet format, including a code (Code) field, an identifier (Identifier) field, and a packet length (Length) field, where the Code field occupies one byte (byte) and is indicated by 8bit (bit) binary. A value of the Code field indicates a different EAP packet type, for example, when the value of the Code field is 03h (00000011 in binary, where "h" indicates hexadecimal, which is the same in the following embodiments), it indicates that the authentication on the IP Phone succeeds, and in this case, the EAP packet is an EAP_SUCCESS packet; when the value of the Code field is 04h (00000100 in binary), it indicates that the authentication on the IP Phone fails, and in this case, the EAP packet is an EAP_FAIL packet. A symbol "XX" indicates that a value of a field is determined according to an actual length of the EAP packet, which is the same in the following embodiments.

In the embodiment of the present invention, as shown in FIG. 3, the switch extends the EAP packet by adding, specifically based on the EAP packet, an option with a format of a type length value (Type Length Value, TLV), that is, several TLV units are added behind the standard EAP packet, and each TLV unit includes a type identifier (Type-id) field, a TLV unit length (Length) field, and a value (Value) field. Table 2 shows definitions of the fields of the TLV unit.

**Table 2**

| Type-id | Length | Value | Remarks |
|---|---|---|---|
| 01h | 6 | Voice VLAN | Identifies a voice domain virtual local area network of an IP Phone. |
| 02h | 6 | Data VLAN | Identifies a data domain virtual local area network of a PC. |
| 03h | 6 | IP-address | Identifies an IP address allocated by a RADIUS server. |
| 04h | <255 | Welcome-info | An authentication success message provided by a RADIUS server |
| 05h | <255 | Fail-cause | An authentication failure cause provided by a RADIUS server |
| ... | ... | ... | ... |

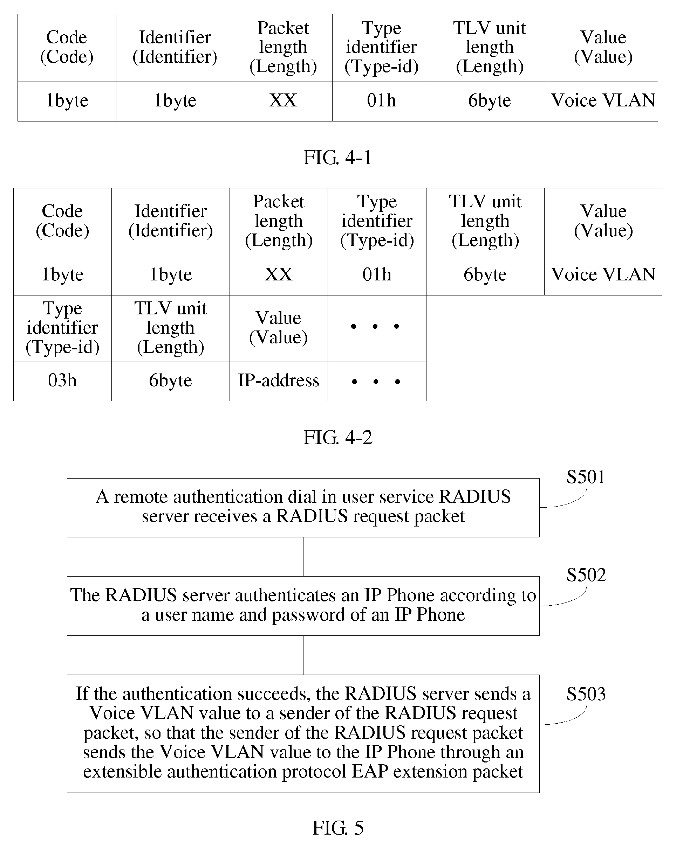

For example, if the authentication performed by the RADIUS server on the IP Phone succeeds, the switch extends the EAP packet, and fills in the EAP extension packet and an extension field of the EAP extension packet with an authentication success identifier and the Voice VLAN value, respectively. According to the definitions of the fields of the TLV unit in Table 2, in the EAP_SUCCESS packet obtained by extending, as shown in FIG. 4-1, the type identifier (Type-id) field, the TLV unit length (Length) field, and the value (Value) field of the TLV unit are "01h", "6 bytes (byte)", and "Voice VLAN", respectively. Further, the switch may further extend the EAP packet, and send the "welcome message (Welcome info)" to the IP Phone through the EAP extension packet, where a specific manner is similar to that of filling in the EAP extension packet and the extension field of the EAP extension packet with the authentication success identifier and the Voice VLAN value, respectively, and sending the EAP extension packet filled with the authentication success identifier and the Voice VLAN value to the IP Phone, and details are not repeatedly described herein.

In another embodiment of the present invention, the switch may further fill in the extension field of the EAP extension packet with an IP address allocated to the IP Phone by the RADIUS server. Specifically, in the EAP_SUCCESS packet shown in FIG. 4-1, a TLV unit is further added, as shown in FIG. 4-2. According to the definitions of the fields of the TLV unit in table 2, in the added TLV unit, contents of the type identifier (Type-id) field, the TLV unit length (Length) field, and the value (Value) field of the TLV unit are "03h", "6 bytes (byte)", and "IP-address", respectively.

In another embodiment of the present invention, if a result of the authentication performed by the RADIUS server on the IP Phone is that the authentication fails, the switch sends the authentication failure and a cause of the authentication failure to the IP Phone through the EAP extension packet; a specific method is similar to that for sending the "welcome message (Welcome info)" to the IP Phone through the EAP extension packet, and details are not repeatedly described herein.

After receiving the EAP extension packet, the IP Phone parses the EAP extension packet, and if an EAPOL_SUCCESS packet is determined by parsing, that is, if the value of the Code field obtained by parsing is "03h", the IP Phone continues to parse the TLV unit. If it is detected that the content of the type identifier (Type-id) of one of the TLV units is "01h", the "Voice-VLAN" of the value (Value) field in the TLV unit is set to the voice domain virtual local area network of the IP Phone, and packet exchange is performed in a manner of a Voice-VLAN tag (Tag) for a subsequent packet. Further, if it is further detected that the content of the type identifier (Type-id) field in the TLV unit is "03h", the "IP_address" of the value (Value) field in the TLV unit is directly used as the IP address allocated to the IP Phone by the RADIUS server, and a subsequent dynamic host configuration protocol (Dynamic Host Configuration Protocol, DHCP) packet is omitted.

The IP Phone may further parse subsequent TLV units one by one, for example, if an EAPOL Fail packet is obtained by parsing (that is, the content of the type identifier (Type-id) field in a subsequent TLV unit is "05h"), the value (Value) field in the TLV unit is mainly parsed, and a specific failure cause is displayed to a user.

Referring to FIG. 5, FIG. 5 is a schematic flow chart of a method for authenticating an IP phone and negotiating a voice domain according to another embodiment of the present invention; the method mainly includes:
S501: A remote authentication dial in user service RADIUS server receives a RADIUS request packet, where the RADIUS request packet encapsulates a user name of an IP Phone and a password of the IP Phone.

In this embodiment, the RADIUS request packet encapsulating the user name of the IP Phone and the password of the IP Phone may be formed in a process in which a sender of the RADIUS request packet, for example, a switch or a BRAS, receives an authentication request packet (for example, an "EAPOL_START" packet) set by the IP Phone and encapsulates the user name of the IP Phone and the password of the IP Phone carried in the authentication request packet in the RADIUS request packet; therefore, the RADIUS request packet received by the RADIUS server encapsulates the user name of the IP Phone and the password of the IP Phone.
S502: The RADIUS server authenticates the IP Phone according to the user name of the IP Phone and the password of the IP Phone.

It should be noted that, in the embodiment of the present invention, each new IP Phone uses a media access control (Media Access Control, MAC) address of the new IP Phone as a user name to configure an account on a RADIUS server for authentication, initially plans a corresponding Voice-VLAN, and establishes a database; table 1 is a schematic table in which the IP Phone configures an account on the RADIUS server. Further, for each IP Phone account, an IP address, a welcome message (displayed to a user when the authentication succeeds) and an authentication failure message (displayed to the user when the authentication fails), and the like may be allocated. Therefore, when the RADIUS server receives the RADIUS request packet encapsulating the user name of the IP Phone and the password of the IP Phone, the RADIUS server may authenticate the IP Phone according to the user name of the IP Phone and the password of the IP Phone, that is, match the user name of the IP Phone and the password of the IP Phone in the RADIUS request packet with the user name of the IP Phone and the password of the IP Phone preconfigured on the RADIUS server.
S503: If the authentication succeeds, the RADIUS server sends a Voice VLAN value to a sender of the RADIUS request packet encapsulating the user name of the IP Phone and the password of the IP Phone, so that the sender of the RADIUS request packet encapsulating the user name of the IP Phone and the password of the IP Phone sends the Voice VLAN value to the IP Phone through an extensible authentication protocol EAP extension packet.

If the authentication succeeds, that is, if the user name of the IP Phone and the password of the IP Phone carried in the RADIUS request packet sent by the sender (which is the switch, the BRAS, or the like) of the RADIUS request packet encapsulating the user name of the IP Phone and the password of the IP Phone correctly match the user name of the IP Phone and the password of the IP Phone preconfigured on the RADIUS server, the RADIUS server sends the Voice VLAN value to the sender of the RADIUS request packet encapsulating the user name of the IP Phone and the password of the IP Phone. The sender of the RADIUS request packet encapsulating the user name of the IP Phone and the password of the IP Phone sends the Voice VLAN value to the IP Phone through the extensible authentication protocol EAP extension packet; for a specific method, reference is made to the embodiments in FIG. 1 to FIG. 4-2, and details are not repeatedly described herein.

In an embodiment of the present invention, at the same time of or after the sending, by the RADIUS server, the Voice VLAN value to the sender of the RADIUS request packet encapsulating the user name of the IP Phone and the password of the IP Phone, the method further includes: sending, by the RADIUS server, an IP address allocated to the IP Phone to the sender of the RADIUS request packet encapsulating the user name of the IP Phone and the password of the IP Phone, so that the sender of the RADIUS request packet encapsulating the user name of the IP Phone and the password of the IP Phone sends the IP address to the IP Phone through the EAP extension packet. For the specific method, reference is made to the embodiments in FIG. 1 to FIG. 4-2, and details are not repeatedly described herein.

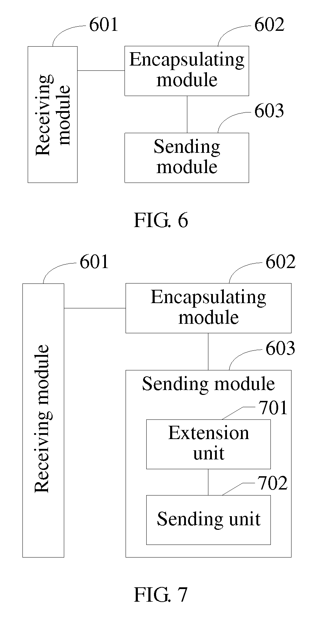

Referring to FIG. 6, FIG. 6 is a schematic structural diagram of an apparatus for authenticating an IP phone and negotiating a voice domain according to an embodiment of the present invention. For ease of description, merely a part related to the embodiment of the present invention is shown. The apparatus for authenticating the IP phone and negotiating the voice domain shown in FIG. 6 may be a switch or a broadband remote access server (Broadband Remote Access Server, BRAS). The apparatus for authenticating the IP phone and negotiating the voice domain is a switch in the following description, but a person skilled in the art may understand that this should not be considered as a limitation to the present invention. The apparatus provided in the embodiment of FIG. 6 includes a receiving module 601, an encapsulating module 602, and a sending module 603.

The receiving module 601 is configured to receive an authentication request packet sent by an internet-based phone IP Phone, where the authentication request packet carries a user name of the IP Phone and a password of the IP Phone.

In the embodiment of the present invention, each new IP Phone uses a MAC address of the new IP Phone as a user name to configure an account on a RADIUS server for authentication, initially plans a corresponding Voice-VLAN, and establishes a database; table 1 is a schematic table in which the IP Phone configures an account on the RADIUS server. Further, for each corresponding IP Phone account, an IP address, a welcome message (displayed to a user when the authentication succeeds) and an authentication failure message (displayed to the user when the authentication fails), and the like may further be allocated. When it is required to authenticate an IP Phone, the IP Phone is inserted into a port of a switch supporting power over Ethernet (Power Over Ethernet, POE), and the switch powers on the IP Phone. After the IP Phone is started, the IP Phone sends an authentication request packet to the switch, for example, an "EAPOL_START" packet; and the receiving module 601 receives the authentication request packet sent by the IP Phone. The authentication request packet carries a user name (that is, a MAC address of the IP Phone) of the IP Phone and a password of the IP Phone preconfigured on a RADIUS server.

The encapsulating module 602 is configured to encapsulate the user name of the IP Phone and the password of the IP Phone in the RADIUS request packet, and send the RADIUS request packet encapsulating the user name of the IP Phone and the password of the IP Phone to the RADIUS server, so that the RADIUS server authenticates the IP Phone.

The RADIUS server authenticates the IP Phone according to the user name of the IP Phone and the password of the IP Phone carried in the RADIUS packet.

The sending module 603 is configured to: if a result of the authentication performed by the RADIUS server on the IP Phone is that the authentication succeeds, send a Voice VLAN value to the IP Phone through an extensible authentication protocol EAP extension packet, so that the IP Phone sets a voice domain virtual local area network according to the Voice VLAN value.

In the embodiment of the present invention, if the result of the authentication performed by the RADIUS server on the IP Phone is that the authentication succeeds, that is, if the user name of the IP Phone and the password of the IP Phone carried in the RADIUS request packet sent by the encapsulating module 602 correctly match the user name of the IP Phone and the password of the IP Phone preconfigured on the RADIUS server, the RADIUS server sends voice domain virtual local area network Voice VLAN value information preconfigured for the IP Phone to the switch through a RADIUS response packet.

The sending module 603 directly removes an EAPOL attribute in the RADIUS packet sent by the RADIUS server, adds a packet header (mainly including a source MAC address and a destination MAC address) of a data link layer, and forms and sends an EAPOL_SUCCESS packet the EAPOL_SUCCESS packet to the IP Phone, where the EAPOL_SUCCESS packet is an extension of an EAP packet. After the IP Phone receives the EAP extension packet, the IP Phone extracts a Voice VLAN value from the EAP extension packet, and sets the voice domain virtual local area network according to the Voice VLAN value.

It should be noted that, in the foregoing implementation manners of the apparatus for authenticating the IP phone and negotiating the voice domain, dividing of functional modules is merely an example for description. In an actual application, the foregoing functions may be allocated to and implemented by different functional modules according to a requirement, for example, considering a configuration requirement of corresponding hardware or ease of software implementation, that is, internal structures of the apparatus for authenticating the IP phone and negotiating the voice domain are divided into different function modules to implement all or a part of functions described in the foregoing. In addition, in an actual application, corresponding function modules in this embodiment may be implemented by corresponding hardware, and may also be implemented by corresponding hardware executing corresponding software. For example, the foregoing receiving module may be hardware capable of executing a function of receiving the authentication request packet sent by the internet-based phone IP Phone, for example, a receiver, and may also be an ordinary processor or another hardware device capable of executing a corresponding computer program to implement the foregoing functions; for another example, the foregoing encapsulating module may be hardware capable of executing a function of encapsulating the user name of the IP Phone and the password of the IP Phone in the remote authentication dial in user service RADIUS request packet and sending the RADIUS packet encapsulating the user name of the IP Phone and the password of the IP Phone to the RADIUS server, for example, an encapsulator, and may also be an ordinary processor or another hardware device capable of executing a corresponding computer program to implement the foregoing functions. (The foregoing principles may be applied to all the embodiments provided in this specification.)

Optionally, the sending module 603 shown in FIG. 6 further includes an extension unit 701 and a sending unit 702; FIG. 7 shows an apparatus for authenticating an IP phone and negotiating a voice domain according to another embodiment of the present invention, and the apparatus includes the receiving module 601, the encapsulating module 602, and the sending module 603 in the embodiment shown in FIG. 6.

The extension unit 701 is configured to extend an EAP packet, and fill in the EAP extension packet and an extension field of the EAP extension packet with an authentication success identifier and the Voice VLAN value, respectively.

The sending unit 702 is configured to send the EAP extension packet filled with the authentication success identifier and the Voice VLAN value to the IP Phone.

Specifically, the extension unit 701 extends the EAP packet by adding, based on the EAP packet, an option with a format of a type length value (Type Length Value, TLV), and fills in the EAP extension packet and the extension field of the EAP extension packet with the authentication success identifier and the Voice VLAN value, respectively.

FIG. 2 shows a standard EAP packet format, including a code (Code) field, an identifier (Identifier) field, and a packet length (Length) field, where the Code field occupies one byte (byte) and is indicated by 8bit (bit) binary. A value of the Code field indicates a different EAP packet type, for example, when the value of the Code field is 03h (00000011 in binary, where "h" indicates hexadecimal, which is the same in the following embodiments), it indicates that the authentication on the IP Phone succeeds, and in this case, the EAP packet is an EAP_SUCCESS packet; when the value of the Code field is 04h (00000100 in binary), it indicates that the authentication on the IP Phone fails, and in this case, the EAP packet is an EAP_FAIL packet. A symbol "XX" indicates that a value of a field is determined according to an actual EAP packet, which is the same in the following embodiments.

In the embodiment of the present invention, as shown in FIG. 3, the extension unit 701 adds several TLV units behind the standard EAP packet. Each TLV unit includes a type identifier (Type-id) field, a TLV unit length (Length) field, and a value (Value) field. Table 2 shows definitions of the fields of the TLV unit.

**Table 2**

| Type-id | Length | Value | Remarks |
|---|---|---|---|
| 01h | 6 | Voice VLAN | Identifies a voice domain virtual local area network of an IP Phone. |
| 02h | 6 | Data VLAN | Identifies a data domain virtual local area network of a PC. |
| 03h | 6 | IP-address | Identifies an IP address allocated by a RADIUS server. |
| 04h | <255 | Welcome-info | An authentication success message provided by a RADIUS server |
| 05h | <255 | Fail-cause | An authentication failure cause provided by a RADIUS server |
| ... | ... | ... | ... |

For example, if the authentication performed by the RADIUS server on the IP Phone succeeds, the extension unit 701 extends the EAP packet, and fills in the EAP extension packet and an extension field of the EAP extension packet with an authentication success identifier and the Voice VLAN value, respectively. According to the definitions of the fields of the TLV unit in Table 2, in the EAP_SUCCESS packet obtained by extending, as shown in FIG. 4-1, the type identifier (Type-id) field, the TLV unit length (Length) field, and the value (Value) field of the TLV unit are "01h", "6 bytes (byte)", and "Voice VLAN", respectively. Further, the extension unit 701 may further extend the EAP packet, and send the "welcome message (Welcome info)" to the IP Phone through the EAP extension packet, where a specific manner is similar to that of filling in the EAP extension packet and the extension field of the EAP extension packet with the authentication success identifier and the Voice VLAN value, respectively, and sending the EAP extension packet filled with the authentication success identifier and the Voice VLAN value to the IP Phone, and details are not repeatedly described herein.

In another embodiment of the present invention, the extension unit 701 may further fill in the extension field of the EAP extension packet with an IP address allocated to the IP Phone by the RADIUS server. Specifically, in the EAP_SUCCESS packet shown in FIG. 4-1, a TLV unit is further added, as shown in FIG. 4-2. According to the definitions of the fields of the TLV unit in table 2, in the added TLV unit, contents of the type identifier (Type-id) field, the TLV unit length (Length) field, and the value (Value) field of the TLV unit are "03h", "6 bytes (byte)", and "IP-address", respectively.

In another embodiment of the present invention, if a result of the authentication performed by the RADIUS server on the IP Phone is that the authentication fails, the sending module 603 may send the authentication failure and a cause of the authentication failure to the IP Phone through the EAP extension packet; a specific method used by the extension unit 701 is similar to that for sending the "welcome message (Welcome info)" to the IP Phone through the EAP extension packet, and details are not repeatedly described herein.

After receiving the EAP extension packet, the IP Phone parses the EAP extension packet, and if an EAPOL_SUCCESS packet is determined by parsing, that is, if the value of the Code field obtained by parsing is "03h", the IP Phone continues to parse the TLV unit. If it is detected that the content of the type identifier (Type-id) of one of the TLV units is "01h", the "Voice-VLAN" of the value (Value) field in the TLV unit is set to the voice domain virtual local area network of the IP Phone, and packet exchange is performed in a manner of a Voice-VLAN tag (Tag) for a subsequent packet. Further, if it is further detected that the content of the type identifier (Type-id) field in the TLV unit is "03h", the "IP_address" of the value (Value) field in the TLV unit is directly used as the IP address allocated to the IP Phone by the RADIUS server, and a subsequent dynamic host configuration protocol (Dynamic Host Configuration Protocol, DHCP) packet is omitted.

The IP Phone may further parse subsequent TLV units one by one, for example, if an EAPOL_Fail packet is obtained by parsing (that is, the content of the type identifier (Type-id) field in a subsequent TLV unit is "05h"), the value (Value) field in the TLV unit is mainly parsed, and a specific failure cause is displayed to a user.

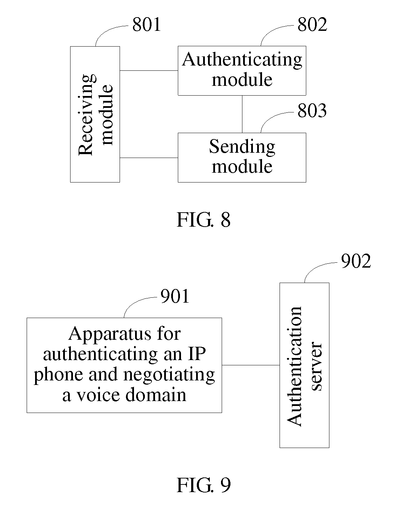

Referring to FIG. 8, FIG. 8 is a schematic structural diagram of an authentication server according to an embodiment of the present invention. For ease of description, merely a part related to the embodiment of the present invention is shown. The authentication server shown in FIG. 8 may be a server used for a remote authentication dial in user service RADIUS, that is, a RADIUS server, including a receiving module 801, an authenticating module 802, and a sending module 803.

The receiving module 801 is configured to receive a RADIUS request packet, where the RADIUS request packet encapsulates a user name of an internet-based phone IP Phone and a password of the IP Phone.

In this embodiment, the RADIUS request packet received by the receiving module 801 may be formed in a process in which a sender of the RADIUS request packet, for example, a switch or a BRAS, receives an authentication request packet (for example, an "EAPOL_START" packet) sent by the IP Phone and encapsulates the user name of the IP Phone and the password of the IP Phone carried in the authentication request packet in the RADIUS request packet; therefore, the RADIUS request packet received by the receiving module 801 encapsulates the user name of the IP Phone and the password of the IP Phone.

The authenticating module 802 is configured to authenticate the IP Phone according to the user name of the IP Phone and the password of the IP Phone.

It should be noted that, in the embodiment of the present invention, each new IP Phone uses a MAC address of the new IP Phone as a user name to configure an account on a RADIUS server for authentication, initially plans a corresponding Voice-VLAN, and establishes a database; table 1 is a schematic table in which the IP Phone configures an account on the RADIUS server. Further, for each corresponding IP Phone account, an IP address, a welcome message (displayed to a user when the authentication succeeds) and an authentication failure message (displayed to the user when the authentication fails), and the like may further be allocated. Therefore, when the receiving module 801 receives the RADIUS packet encapsulating the user name of the IP Phone and the password of the IP Phone, the authenticating module 802 may authenticate the IP Phone according to the user name of the IP Phone and the password of the IP Phone, that is, match the user name of the IP Phone and the password of the IP Phone in the RADIUS request packet with the user name of the IP Phone and the password of the IP Phone preconfigured on the RADIUS server.

The sending module 803 is configured to: if the authentication succeeds, send a Voice VLAN value to a switch, so that the sender of the RADIUS request packet sends the Voice VLAN value to the IP Phone through an extensible authentication protocol EAP extension packet.

If the authentication performed by the authenticating module 802 on the IP Phone succeeds, that is, if the user name of the IP Phone and the password of the IP Phone carried in the RADIUS request packet sent by the sender (the switch or the BRAS, or the like) of the RADIUS request packet correctly match the user name of the IP Phone and the password of the IP Phone preconfigured on the RADIUS server, the sending module 803 sends the Voice VLAN value to the sender of the RADIUS request packet. The sender of the RADIUS request packet sends the Voice VLAN value to the IP Phone through the extensible authentication protocol EAP extension packet; for a specific method, reference is made to the embodiments in FIG. 1 to FIG. 4, and details are not repeatedly described herein.

It should be noted that, in the foregoing implementation manners of the authentication server, dividing of the function modules is merely an example for description. In an actual application, the foregoing functions may be allocated to and implemented by different functional modules according to a requirement, for example, considering a configuration requirement of corresponding hardware and ease of software implementation, that is, internal structures of the authentication server are divided into different function modules to implement all or a part of functions described in the foregoing. In addition, in an actual application, corresponding function modules in this embodiment may be implemented by corresponding hardware, and may also be implemented by corresponding hardware executing corresponding software. For example, the foregoing receiving module may be hardware capable of executing a function of receiving the RADIUS request packet, for example, a receiver, and may also be an ordinary processor or another hardware device capable of executing a corresponding computer program to implement the foregoing functions; for another example, the foregoing authenticating module may be hardware capable of executing a function of performing the authentication on the IP Phone according to the user name of the IP Phone and the password of the IP Phone, for example, an authenticator, and may also be an ordinary processor or another hardware device capable of executing a corresponding computer program to implement the foregoing functions. (The foregoing principles may be applied to all the embodiments provided in this specification.)

In another embodiment of the present invention, the sending module 803 shown in FIG. 8 may be further configured to send an internet protocol IP address allocated to the IP Phone to the sender of the RADIUS request packet, so that the sender of the RADIUS request packet sends the IP address to the IP Phone through the EAP extension packet.

Referring to FIG. 9, FIG. 9 is a schematic structural diagram of a system for authenticating an IP phone and negotiating a voice domain according to an embodiment of the present invention. For ease of description, merely a part related to the embodiment of the present invention is shown. The system for authenticating the IP phone and negotiating the voice domain shown in FIG. 9 includes an apparatus 901 for authenticating an IP phone and negotiating a voice domain shown in FIG. 6 or FIG. 7 and an authentication server 902 shown in FIG. 8.

The apparatus 901 for authenticating the IP phone and negotiating the voice domain is configured to receive an authentication request packet sent by an IP Phone, encapsulate the user name of the IP Phone and the password of the IP Phone carried in the authentication request packet in a RADIUS packet, and send the encapsulated RADIUS packet to the authentication server 902; when a result of the authentication performed by the authentication server 902 on the IP Phone is that the authentication succeeds, send a voice domain virtual local area network Voice VLAN value to the IP Phone through an extensible authentication protocol EAP extension packet, so that the IP Phone sets a voice domain virtual local area network according to the Voice VLAN value. For example, the apparatus 901 for authenticating the IP phone and negotiating the voice domain extends the EAP packet, fills in the EAP extension packet and an extension field of the EAP extension packet with an authentication success identifier and the Voice VLAN value, respectively, and sends the EAP extension packet filled with the authentication success identifier and the Voice VLAN value to the IP Phone.

The authentication server 902 is configured to receive the RADIUS packet encapsulating the user name of the IP Phone and the password of the IP Phone sent by the apparatus 901 for authenticating the IP phone and negotiating the voice domain, authenticate the IP Phone according to the user name of the IP Phone and the password of the IP Phone, and after the authentication succeeds, send a Voice VLAN value to the apparatus 901 for authenticating the IP phone and negotiating the voice domain, so that the apparatus 901 for authenticating the IP phone and negotiating the voice domain sends the Voice VLAN value to the IP Phone through the extensible authentication protocol EAP extension packet.

It should be noted that content about processes of interaction and execution between the modules/units of the foregoing apparatus are based on a same idea with those of the method embodiments of the present invention, and technical effects brought by the processes of interaction and execution between the modules/units of the foregoing apparatus are the same as those of the method embodiments of the present invention; for specific content, reference may be made to the description in the method embodiments of the present invention, and details are not repeatedly described herein.

A person of ordinary skill in the art may understand that all or a part of the steps of the methods in the foregoing embodiments may be implemented by a program instructing relevant hardware, for example, one, more, or all of the following methods.
Method 1:
   receiving an authentication request packet sent by an internet-based phone IP Phone, where the authentication request packet carries a user name of the IP Phone and a password of the IP Phone;
   encapsulating the user name of the IP Phone and the password of the IP Phone in a remote authentication dial in user service RADIUS request packet, and sending the RADIUS packet encapsulating the user name of the IP Phone and the password of the IP Phone to a RADIUS server, so that the RADIUS server authenticates the IP Phone; and
   if a result of the authentication performed by the RADIUS server on the IP Phone is that the authentication succeeds, sending a voice domain virtual local area network Voice VLAN value to the IP Phone through an extensible authentication protocol EAP extension packet, so that the IP Phone sets a voice domain virtual local area network according to the Voice VLAN value.
Method 2:
   receiving, by a remote authentication dial in user service RADIUS server, a RADIUS request packet, where the RADIUS request packet encapsulates a user name of an internet-based phone IP Phone and a password of the IP Phone;
   authenticating, by the RADIUS server, the IP Phone according to the user name of the IP Phone and the password of the IP Phone; and
   if the authentication succeeds, sending, by the RADIUS server, a voice domain virtual local area network Voice VLAN value to a sender of the RADIUS request packet, so that the sender of the RADIUS request packet sends the Voice VLAN value to the IP Phone through an extensible authentication protocol EAP extension packet.

The program may be stored in a computer readable storage medium. The storage medium may include: a read-only memory (Read-Only Memory, ROM), a random access memory (Random Access Memory, RAM), a magnetic disk, or an optical disc.

The foregoing describes the method, system, and related device for authenticating the IP phone and negotiating the voice domain according to the embodiments of the present invention in detail. Principles and implementation manners of the present invention are described through specific examples in this specification. The description about the foregoing embodiments is merely used for helping to understand the methods and core ideas of the present invention; meanwhile, a person of ordinary skill in the art may make variations to specific implementation manners and application scopes according to ideas of the present invention. To sum up, the content of this specification shall not be understood as a limitation to the present invention.

## Claims

1. A method for authenticating an internet protocol IP Phone and negotiating a voice domain, comprising:
receiving an authentication request packet sent by an internet-based phone IP Phone, wherein the authentication request packet carries a user name of the IP Phone and a password of the IP Phone;
encapsulating the user name of the IP Phone and the password of the IP Phone in a remote authentication dial in user service RADIUS request packet, and sending the RADIUS request packet encapsulating the user name of the IP Phone and the password of the IP Phone to a RADIUS server, so that the RADIUS server authenticates the IP Phone; and
if a result of the authentication performed by the RADIUS server on the IP Phone is that the authentication succeeds, sending a voice domain virtual local area network Voice VLAN value to the IP Phone through an extensible authentication protocol EAP extension packet, so that the IP Phone sets a voice domain virtual local area network according to the Voice VLAN value.

2. The method according to claim 1, wherein the sending the voice domain virtual local area network Voice VLAN value to the IP Phone through an extensible authentication protocol EAP extension packet comprises:
extending an EAP packet, and filling in the EAP extension packet and an extension field of the EAP extension packet with an authentication success identifier and the Voice VLAN value, respectively; and
sending the EAP extension packet filled with the authentication success identifier and the Voice VLAN value to the IP Phone.

3. The method according to claim 2, wherein the extending, by a switch, an EAP packet comprises:
adding, based on the EAP packet, an option with a format of a type length value TLV.

4. The method according to claim 2, wherein after or at a same time of the extending an EAP packet, and filling in the EAP extension packet and an extension field of the EAP extension packet with an authentication success identifier and the Voice VLAN value, respectively, the method further comprises:
filling in the extension field of the EAP extension packet with an internet protocol IP address configured for the IP Phone by the RADIUS server.

5. The method according to any one of claims 1 to 4, wherein if a result of the authentication performed by the RADIUS server on the IP Phone is that the authentication fails, the authentication failure and a cause of the authentication failure are sent to the IP Phone through the EAP extension packet.

6. A method for authenticating an IP phone and negotiating a voice domain, comprising:
receiving, by a remote authentication dial in user service RADIUS server, a RADIUS request packet, wherein the RADIUS request packet encapsulates a user name of an internet-based phone IP Phone and a password of the IP Phone;
authenticating, by the RADIUS server, the IP Phone according to the user name of the IP Phone and the password of the IP Phone; and
if the authentication succeeds, sending, by the RADIUS server, a voice domain virtual local area network Voice VLAN value to a sender of the RADIUS request packet, so that the sender of the RADIUS request packet sends the Voice VLAN value to the IP Phone through an extensible authentication protocol EAP extension packet.

7. The method according to claim 6, wherein at a same time of or after the sending, by the RADIUS server, a voice domain virtual local area network Voice VLAN value to a sender of the RADIUS request packet, the method further comprises:
sending, by the RADIUS server, an internet protocol IP address configured for the IP Phone to the sender of the RADIUS request packet, so that the sender of the RADIUS request packet sends the IP address to the IP Phone through the EAP extension packet.

8. An apparatus for authenticating an IP phone and negotiating a voice domain, comprising:
a receiving module, configured to receive an authentication request packet sent by an internet-based phone IP Phone, wherein the authentication request packet carries a user name of the IP Phone and a password of the IP Phone;
an encapsulating module, configured to encapsulate the user name of the IP Phone and the password of the IP Phone in a remote authentication dial in user service RADIUS request packet, and send the RADIUS request packet encapsulating the user name of the IP Phone and the password of the IP Phone to a RADIUS server, so that the RADIUS server authenticates the IP Phone; and
a sending module, configured to: if a result of the authentication performed by the RADIUS server on the IP Phone is that the authentication succeeds, send a voice domain virtual local area network Voice VLAN value to the IP Phone through an extensible authentication protocol EAP extension packet, so that the IP Phone sets a voice domain virtual local area network according to the Voice VLAN value.

9. The apparatus according to claim 8, wherein the sending module comprises:
an extension unit, configured to extend an EAP packet, and fill in the EAP extension packet and an extension field of the EAP extension packet with an authentication success identifier and the Voice VLAN value, respectively; and
a sending unit, configured to send the EAP extension packet filled with the authentication success identifier and the Voice VLAN value to the IP Phone.

10. The apparatus according to claim 9, wherein the extension unit specifically extends the EAP packet by adding, based on the EAP packet, an option with a format of a type length value TLV.

11. The apparatus according to claim 9, wherein the extension unit is further configured to fill in the extension field of the EAP extension packet with an internet protocol IP address configured for the IP Phone by the RADIUS server.

12. An authentication server, wherein the authentication server is a server used for a remote authentication dial in user service RADIUS, and the authentication server comprises:
a receiving module, configured to receive a RADIUS request packet, wherein the RADIUS request packet encapsulates a user name of an internet-based phone IP Phone and a password of the IP Phone;
an authenticating module, configured to authenticate the IP Phone according to the user name of the IP Phone and the password of the IP Phone; and
a sending module, configured to: if the authentication succeeds, send a voice domain virtual local area network Voice VLAN value to a sender of the RADIUS request packet, so that the sender of the RADIUS request packet sends the Voice VLAN value to the IP Phone through an extensible authentication protocol EAP extension packet.

13. The server according to claim 12, wherein the sending module is further configured to send an internet protocol IP address configured for the IP Phone to the sender of the RADIUS request packet, so that the sender of the RADIUS request packet sends the IP address to the IP Phone through the EAP extension packet.

14. A system for authenticating an IP Phone and negotiating a voice domain, comprising an apparatus for authenticating an IP Phone and negotiating a voice domain and an authentication server, wherein the authentication server is a server used for a remote authentication dial in user service RADIUS;
the apparatus for authenticating the IP phone and negotiating the voice domain is configured to: receive an authentication request packet sent by an internet-based phone IP Phone; encapsulate a user name of the IP Phone and a password of the IP Phone carried in the authentication request packet in a RADIUS request packet, and send the RADIUS request packet encapsulating the user name of the IP Phone and the password of the IP Phone to the authentication server; when a result of the authentication performed by the authentication server on the IP Phone is that the authentication succeeds, send a voice domain virtual local area network Voice VLAN value to the IP Phone through an extensible authentication protocol EAP extension packet, so that the IP Phone sets a voice domain virtual local area network according to the Voice VLAN value; and
the authentication server is configured to receive the RADIUS request packet encapsulating the user name of the IP Phone and the password of the internet-based phone IP Phone sent by the apparatus for authenticating the IP phone and negotiating the voice domain, authenticate the IP Phone according to the user name of the IP Phone and the password of the IP Phone, and after the authentication succeeds, send the voice domain virtual local area network Voice VLAN value to the apparatus for authenticating the IP phone and negotiating the voice domain, so that the apparatus for authenticating the IP phone and negotiating the voice domain sends the Voice VLAN value to the IP Phone through the extensible authentication protocol EAP extension packet.
